# EUROPEAN PATENT SPECIFICATION

(11) **EP 1 304 625 B1**
(45) Date of publication and mention of the grant of the patent: **10.01.2007**
(21) Application number: 02022944.9
(22) Date of filing: 11.10.2002
(51) Int. Cl.: G06F 17/24, G06F 17/30

(54) **Method and apparatus for forward annotating documents and for generating a summary from a document image**
Verfahren und Anordnung zur vorherige Anmerkung von Dokumente und zur Erstellung einer Zusammenfassung anhand von Dokumentbilddaten
Procédé et dispositif d'annotation préalable des documents et de génération d'un résumé à base d'un image de document

(30) Priority: 19.10.2001 US 981835; 19.10.2001 US 982024
(43) Date of publication of application: 23.04.2003
(73) Proprietor: Xerox Corporation, Rochester, New York 14644 (US)
(72) Inventor: Kuruoglu, Ecran E., 56125 Pisa (IT); Taylor, Alex S., Guilford, Surrey GU1 4LE (GB)
(74) Representative: Holmes, Miles Keeton

(56) References cited:
- EP-A- 0 902 379
- EP-A- 0 902 380
- US-A- 4 868 750
- CHEN F R ET AL: "DETECTION AND LOCATION OF MULTICHARACTER SEQUENCES IN LINES OF IMAGED TEXT" January 1996 (1996-01), JOURNAL OF ELECTRONIC IMAGING, SPIE + IS&T, US, PAGE(S) 37-49 , XP000551171 ISSN: 1017-9909 * the whole document *
- NAGAO K., HASIDA K.: "Automatic text summarization based on the Global Document Annotation" August 1998 (1998-08), PROCEEDINGS OF THE 17TH INTERNATIONAL CONFERENCE ON COMPUTATIONAL LINGUISTICS , MONTREAL, QUEBEC, CANADA 2 , XP002324871 * page 921, column 1, lines 10-28 *
- J. STEVENS, A. GEE AND C. DANCE: "Automatic processing of document annotations" September 1998 (1998-09), PROCEEDINGS OF THE 1998 BRITISH MACHINE VISION CONFERENCE, PAGES 438-448 , SOUTHAMPTON, UK 2 , XP002324872 * page 438, lines 9,10, paragraph 1; figure 1 *

## Description

This invention relates to the field of processing documents. The invention is especially suitable for, but not limited to, processing captured images of documents. The invention also relates to processing a scanned image of a document to generate a document summary from the scanned image.

There are many situations in which a person has to read several documents, looking for the same information in each document. This is very time consuming and the user may be likely to miss or overlook important information buried in other text.

It would be desirable if a document to be read could be somehow marked automatically to draw a user's attention to certain portions of the document which may contain significant information, irrespective of the type or format of the document.

There are also many occasions in which it would be desirable to compile automatically a summary of a document. Several approaches for such systems have been proposed in the prior art.

For example, European Patent Application EP 0902379 A2 describes a technique in which a user is able to mark certain words or phrases in an electronic version of a document (for example ASCII text), which the system then extracts to compile a document summary. However, such a system requires the user to work with an electronic version of the document. Furthermore, the document must already exist in the electronic form before any words or phrases can be selected by the user.

Regarding the summarizing of paper documents (or scanned images of paper documents), reference may be made to the following documents:
U.S. Patent Nos. 5,638,543 and 5,689,716 describe systems in which paper document images are scanned and the images are processed using optical character recognition (OCR) to produce a machine-readable version of the document. A summary is generated by allocating "scores" to sentences depending on critical or thematic words detected in the sentence. The summary is generated from the sentences having the best scores.
U.S. Patent No. 5,848,191 describes a system similar to U.S. Patent No. 5,689,716 using scores to rank sentences, the score being dependent on the number of thematic words occurring in a sentence. However, in U.S. Patent No. 5,848,191, the summary is generated directly from the scanned image without performing OCR.
U.S. Patent No. 5,491,760 describes a system in which significant words, phrases and graphics in a document image are recognized using automatic or interactive morphological image recognition techniques. A document summary or an index can be produced based on the identified significant portions of the document image.

"Summarization Of Imaged Documents Without OCR" by Chen and Bloomberg, in Computer Vision and Image Understanding, Vol. 70, No. 3, June 1998, on pages 307-320, describes an elaborate technique based on feature extraction and scoring sentences based on the values of a set of discrete features. Prior information is used in the form of feature vector values obtained from summaries compiled by professional human summary compilers. The sentences to be included in the summary are chosen according to the score of the sentence.

The above paper based techniques all employ variations of statistical scoring to decide (either on the basis of OCR text or on the basis of image maps) which features, or sentences, should be extracted for use in the complied summary.

Reference may be made to XP000551171, Chen et al, "Detection and Location of Multicharacter Sequences in Lines of Imaged Text", which describes the pre-characterizing features of one aspect of the invention. Reference may also be made to XP002324871, Nagao, "Automatic Text Summaraization based on the Global Document Annotation", which describes the pre-characterizing features of a second aspect of the invention. Reference may also be made to US-A-4868750, EP-A-0902380 and XP002324872, Stevens et al, "Automatic Processing of Document Annotations".

The present invention is defined in the claims

The present invention can provide a technique in which a target document is annotated on the basis of one or more keywords previously entered into the processing system.

In more detail, the target document is searched to identify the occurrence of the one or more keywords, and any such occurrences are annotated (with an electronically generated annotation) to guide the user to such text.

One aspect of the present invention is to generate a summary of a captured (e.g., scanned) image of a document on the basis of detected handwritten or electronic annotations made to a document prior to scanning.

In more detail, the captured image is processed to detect annotations made to the document prior to image capture. The detected annotations in one document can be used to identify features, or text, for use to summarize a different document.

The term annotate is intended to be interpreted broadly, and may include any suitable marking (e.g., highlighting, circling, crossing through, bracketing, underlining, bolding, italicizing, or coloring) or other technique for visually indicating a section of the document.

Preferably, the keywords are derived from a source document which has been previously annotated by a user. The system may thus be referred to as a "forward annotation" system for automatically "forwarding" annotations made to a source document into equivalent annotations of a target document.

Preferably, the source document may be either a paper (or other physical) document, or an electronic document (e.g., a text file).

Preferably, the target document may be either a paper (or other physical) document, or an electronic document (e.g., a text file or image of the document).

Preferably, the system comprises a project storage device for storing keywords from a plurality of source documents.

Preferably, the storage device also stores the complete source documents (either in electronic text form, or as a scanned image).

These and other aspects of the invention will become apparent from the following description read in conjunction with the accompanying drawings wherein the same reference numerals have been applied to like parts and in which:
Fig. 1 is a block diagram showing a document processing system;
Fig. 2 is a schematic diagram illustrating the operating principles of the system;
Fig. 3 is a schematic illustration of an example process;
Fig. 4 is a schematic flow diagram illustrating an input method;
Fig. 5 is a schematic flow diagram illustrating an output method;
Fig. 6 is a schematic block diagram of a first embodiment for processing a paper document to generate a summary of the document;
Fig. 7 is a schematic flow diagram showing the process for generating the summary;
Fig. 8 is a schematic view of an annotated page of a document;
Fig. 9 is an enlarged schematic view of a portion of Fig. 8 illustrating extraction of a sentence; and
Fig. 10 is a schematic diagram illustrating options for displaying the summary.

Referring to the drawings, a document processing system 10 comprises an image capture device 14 for capturing a digital image of a document 12. The image capture device may for example comprise a flatbed scanner, or a desktop camera-based scanning device.

The system further comprises a processor 16 for processing the image, one or more user input devices 18, for example, a keyboard and/or a pointing device, and one or more output devices 20, for example, an output display and/or a printer.

The processor comprises 16 a mass storage device 22 which may, for example, be implemented with any suitable memory media, such as magnetic media, optical media, or semiconductor media.

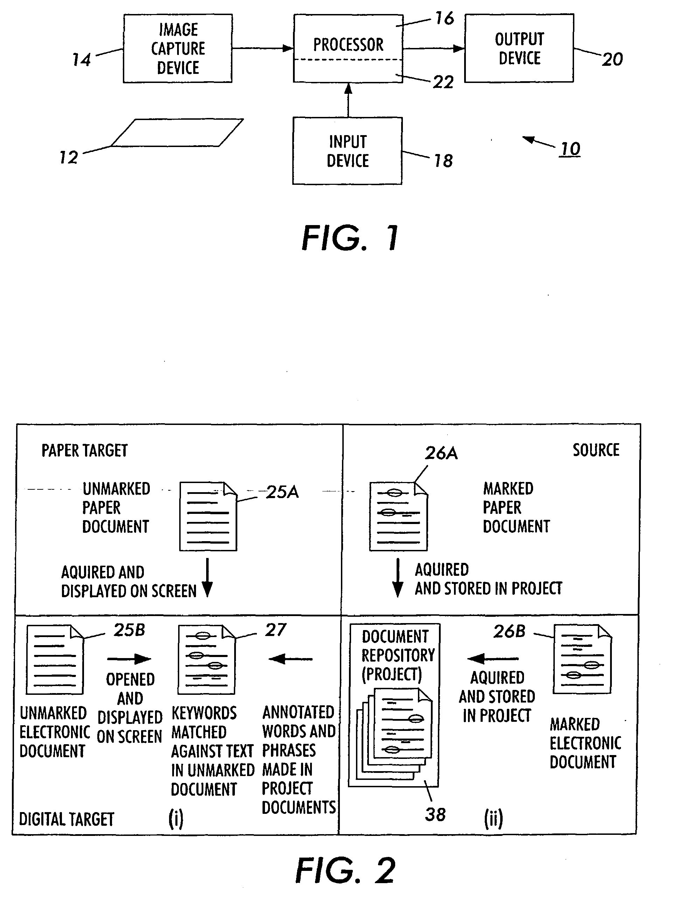

Referring to Fig. 2, the function of this embodiment is to automatically annotate a "target" document 25 which a user may desire to read, to indicate regions of interest based on previously stored annotations from other "source" documents 26. The system produces an annotated target document 27 that is based on external annotations previously made by the same user (or other users) to one or more previous documents 26. The system may thus be referred to as a "forward annotation" system.

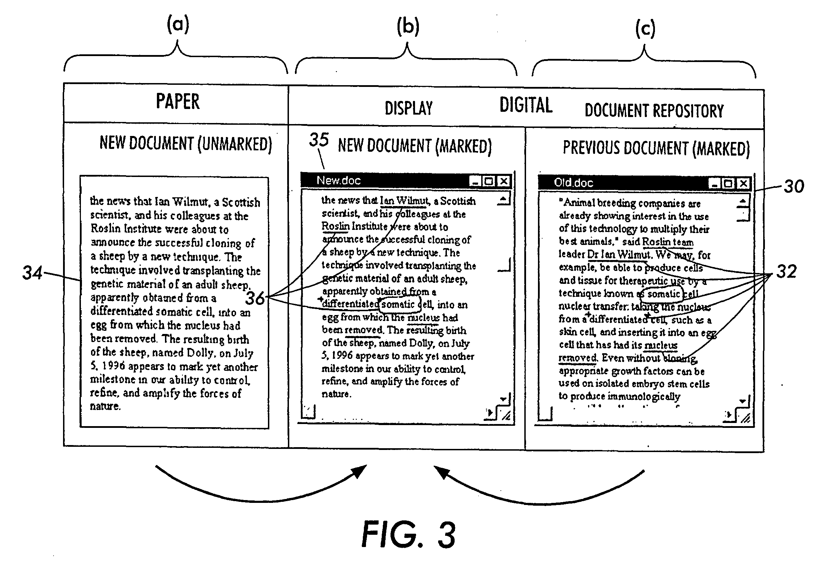

One example of this is illustrated in Fig. 3. Fig. 3 (c) shows a source document 30 which has been annotated on paper by a user to represent the useful text 32 which the user wishes to identify in future target documents. The document 30 is scanned into the processing system 10, which processes the scanned image to identify the annotated text (described in more detail below).

Fig. 3 (a) illustrates a target paper document 34 which the user now wishes to read. At this stage the target document is plain (i.e. it contains no annotations to guide the user to the significant text). The target document 34 is scanned into the processing system which then processes the scanned image to identify whether any of the previously annotated words 32 are present in the target document. If they are, then the same words appearing in the target document 34 are annotated (within the digital image 35 of the target document 34) to be given the same annotations 36 as the source document 30, as illustrated in Fig. 3 (b). The annotated target document can then be displayed or printed out for the user to read.

Referring again to Fig. 2, the processor 16 maintains a library or repository of the data or images from each source document, in the form of a project 38. Each project 38 can include a plurality of documents or annotations from different documents. The project may either contain document images, or it may contain data representing the identified annotations.

In this embodiment, the source documents are not limited only to paper documents, but may include electronic versions of a document, such as a text file or a word-processing file. In this case, the annotations in the electronic source document may be made by any suitable technique, including, for example, underlining, highlighting or insertion of markers. In addition, the annotations in the electronic source document may include a variety of data formats such as image, video, audio, graphic, and textual.

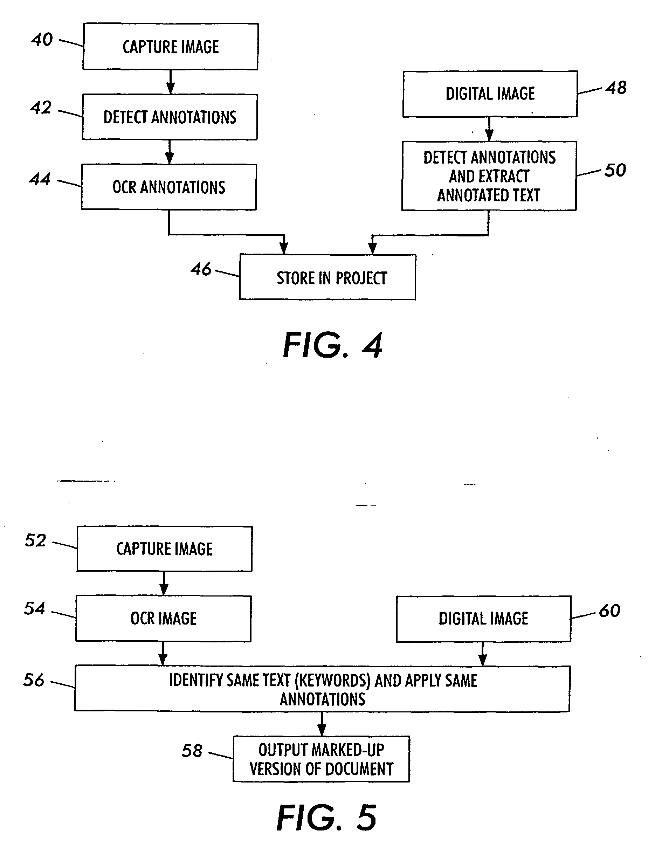

Fig. 4 shows a technique for inputting source documents into the processing system 10. At step 40, a paper document (including paper annotations) is scanned using the capture device 14 to generate a digital image of the document.

At step 42, the paper annotations are identified in the scanned image. Techniques for identifying annotations are known to one skilled in the art, and so need not be described here in detail. However, as an example, U.S. Patent No. 5,384,863 describes a suitable system for discriminating hand written annotations from machine printed text.

At step 44, the text corresponding to the annotated regions is processed by an optical character recognition (OCR) algorithm to convert that region (text) into electronic text. This performed in the present embodiment as an optimum technique for identifying the same text in later target documents (especially electronic target documents). However, it will be appreciated that if desired a bitmap of the annotated text may be extracted instead, and the annotation used as a source in bitmap form.

At step 46, the extracted text (OCR text of bitmap) is stored in the project 38 together with data representing the type of annotation (for example, underlined or highlighted or ringed, etc.). The text is thus treated as a keyword or key-phrase for use in searching of future target documents.

As mentioned above, if desired the entire document (rather than merely the keywords or key-phrases) can be stored in the project 38. However, the keywords or key-phrases are stored as the text for future searching.

If the source document is an electronic document, then this is inputted electronically instead at step 48. The electronic document is processed at step 50 to identify and extract annotated regions of the document, and such annotations are then stored at step 46 in the same manner as described above.

Using this method it is possible to build up a project 38 comprising one or more documents containing annotations indicative of text of interest to the user.

Fig. 5 illustrates a technique for processing target documents to apply the same annotations as made in the source documents. If the target document is a paper document, this is scanned at step 52 to form a digital image using the capture device 14.

At step 54, the digital image is processed using an OCR algorithm to convert the scanned image into electronic text.

At step 56, the electronic text is searched to identify whether any of the previous annotations stored in the project 38 are present in the target document. If they are, then equivalent annotations (in electronic form) are applied to the electronic text.

At step 58, the annotated target document is outputted for display or for printing.

If the target document is an electronic document, then this is inputted instead at step 60 for direct processing at step 56.

If desired, the user may have the option to selectively edit, manipulate or delete annotations made to both marked (source) documents and to unmarked (target) documents.

If desired, the system may be enabled or disabled to detect frequently used words (less stop words), automatically annotate the document, and register the frequently used words as keywords to the project.

If desired, once a document has been processed at step 56, the document may be stored as part of the project 38. In this case, the project would store a complete representation of the document, rather than merely the extracted annotations (keywords or key-phrases). The document can then be retrieved for display simply by clinking on an annotation in another document stored in the project.

In this embodiment, the OCR processing of scanned images can enable annotations made to paper source documents to be used for annotating electronic target documents, and also annotations made to electronic source documents to be used for annotating paper target documents. Additionally, it can also compensate for different character fonts and character sizes in different paper documents. However, if this versatility is not required in other embodiments, then the principles of the invention may be used without OCR, for example in a system which only processes electronic documents (source and target) or in a system which only processes paper documents (source and target).

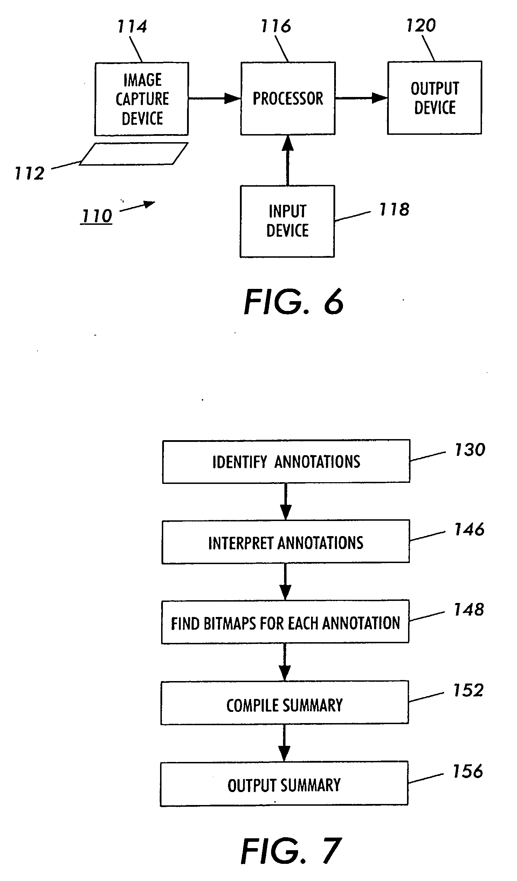

Referring to Fig. 6, a system 110 is illustrated for generating a summary from a paper document 112. The system comprises an optical capture device 114 for capturing a digital image (for example a bitmap image) of each page of the paper document 112. The capture device 114 may be in the form of a digital camera, or a document scanner.

The system 110 also includes a processor 116 for processing the captured digital image to generate a summary therefrom. The processor is coupled to one or more operator input devices 118 (for example, a keyboard, or a pointing device) and also to one or more output devices 120 for outputting the generated summary. The output devices 120 may, for example, include a display unit and/or a printer.

In contrast to the prior art, one of the principles of this embodiment is to generate the summary on the basis of annotations made by hand to the paper document prior to scanning (or capture) by the optical capture device 114. The processor 116 processes the digital image to detect hand annotations indicating areas of interest in the paper document. Text or other features indicated by the annotations are extracted and used to compile the summary. The summary therefore reflects the areas of interest identified by the hand annotations in the paper document.

Referring to Fig. 7, the process for creating the summary by the processor 116 comprises a first step 130 of identifying in the captured digital image, the annotations made by the user. Suitable techniques for identifying annotations are described, for example, in U.S. Patent Nos. 5,570,435, 5,748,805 and 5,384,863.

These patents disclose techniques for distinguishing regular machine printing from handwritten marks and annotations.

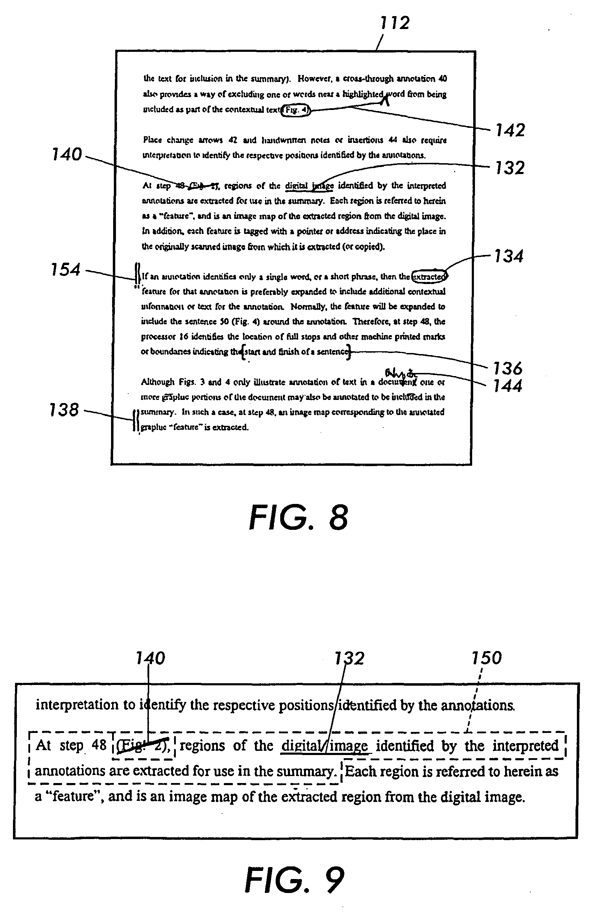

Fig. 8 illustrates the kind of hand annotations which can be identified typically, which include underlining 132, circling 134, bracketing 136, margin bracketing or marking 138, cross-through 140, anchored arrows indicating place changes 142, and handwritten notes or insertions 144.

At step 146 (Fig. 7), interpretation of the annotations is carried out. The level of interpretation may vary from one embodiment to another, depending on the complexity of annotation permitted by the system 110. For example, simple word underlining 132 or circling 134 does not need interpretation, as the words are identified directly by the annotations. Bracketing 136 and margin marking 138 requires only simple interpretation as identifying the entire text spanned by the brackets or marking.

Cross-through annotations 140 are preferably interpreted as a negative annotation, for excluding the crossed-through text from the summary. This may be regarded in one respect as being equivalent to no annotation at all (and hence not drawing any focus to the text for inclusion in the summary). However, a cross-through annotation 140 also provides a way of excluding one or more words near a highlighted word from being included as part of the contextual text (Fig. 9).

Place change arrows 142 and handwritten notes or insertions 144 also require interpretation to identify the respective positions identified by the annotations.

At step 148 (Fig. 7), regions of the digital image identified by the interpreted annotations are extracted for use in the summary. Each region is referred to herein as a "feature", and is an image map of the extracted region from the digital image. In addition, each feature is tagged with a pointer or address indicating the place in the originally scanned image from which it is extracted (or copied).

If an annotation identifies only a single word, or a short phrase, then the extracted feature for that annotation is preferably expanded to include additional contextual information or text for the annotation. Normally, the feature will be expanded to include the sentence 150 (Fig. 9) around the annotation. Therefore, at step 148, the processor 116 identifies the location of full stops and other machine printed marks or boundaries indicating the start and finish of a sentence.

Although Figs. 8 and 9 only illustrate annotation of text in a document, one or more graphic portions of the document may also be annotated to be included in the summary. In such a case, at step 148, an image map corresponding to the annotated graphic "feature" is extracted.

At step 152, the summary is compiled from the extracted features. The summary may be compiled in the form of image maps of the extracted features, or text portions of the features may be OCR processed to generate character-codes for the text. Similarly, handwritten notes or insertions may be OCR processed to generate character-codes, or they may be used as image maps.

During compilation, any further interpretation of the annotations which may be required can be carried out. For example, any crossed-through text can be deleted (removed) from the summary (for example, the crossed through text 140 in Fig. 9).

Additionally, during compilation, identically annotated features may be itemized, for example, with bullets. For example, sentences containing circled words may be organized together as a bulleted list. Such an operation is preferably a user controllable option, but this can provide a powerful technique enabling a user to group items of information together in the summary simply by using the same annotation for marking the information in the original document.

Additionally, during compilation, parts of the summary may be highlighted as important, based on the annotations made by hand. For example, annotations such as an exclamation mark (154 in Fig. 8) or double underlining may be included in the summary as importance marking, for example, by bold or underlined text, or text in a different color.

At step 156, the compiled summary is outputted, for example, on the user's display or printer.

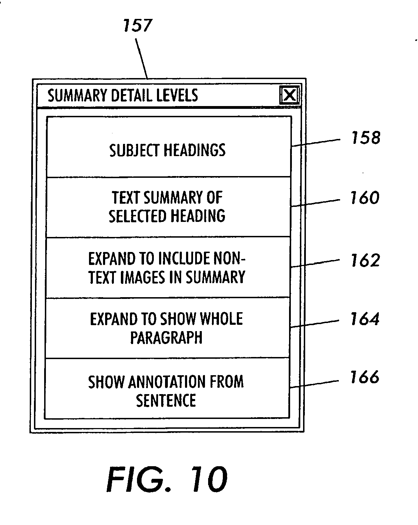

In this embodiment, the system 110 provides a plurality of layered detail levels in a window 157 for the summary, indicated in Fig. 10. These layers may be applied either during compilation, or during outputting of the summary information.

The lowest detail level 158 merely includes any subject headings extracted from the document.

By clicking on any subject heading, the subject heading is expanded to its second detail level 160 to generate the text summary of that appropriate section of the document. The second detail level 160 only includes text features. However, by clicking again, the summary is expanded (third detail level 162) to include non-text features as part of the summary, such as annotated figures from that section of the document.

By clicking on any sentence, the summary is expanded (fourth detail level 164) to display further context for the sentence, for example, by displaying the paragraph containing the sentence.

In a final layer (fifth detail level 166), the annotation associated with any sentence in the document may be "retrieved" by clicking on the sentence.

In an alternate embodiment the plurality of layered detail levels for the summary may be accessed simply by clicking on each level of detail set forth in the window 157 shown in Fig. 10. That is window 157 may be used to both indicate a current level of detail being used to summarize a document as well as access a particular level of detail.

In the present embodiment (not forming part of the invention), the summary is based on annotations made to the document to be summarized. However, in other embodiments forming part of the invention, the summary may be made based on annotations made to a different document, for example, a previously annotated document or a master document. In such an embodiment, a first document is annotated by hand, and the annotations are detected and stored by the system 110. A second document is then captured by the system, and the second document is processed based on the annotations detected from the first document. In other words, the annotations detected in the first document are used as a guide for generation of the abstract of the second document (in the same manner as if the hand annotations had been made to the second document).

Additionally, although some of the above-outlined embodiments simply annotate a target document based on one or more source annotations, other ones of the above-outlied embodiments may employ the annotations in other ways. For example, the various exemplary embodiments outolined above may be combined. In such a combined technique, a target document could be automatically summarized based on annotations made previously to a different source document.

The invention has been described with reference to various exemplary embodiments. Modifications and alterations will occur to others upon reading and understanding this specification taken together with the drawings. The embodiments are but examples, and various alternatives, modifications, variations or improvements may be made within the scope of the invention defined by the following claims.

## Claims

1. A system for processing a source document (26; 30) and a target document (25; 34), the system comprising:
a storage device (22) for storing a plurality of words;
an input device (14, 16) for inputting words into the storage device;
a search device (16) for identifying whether any of the words present in the storage device are present in the target document; and
an annotation device (16) for annotating said words located in the target document; **characterized in that**:
the input device is configured for inputting words from the source document into the storage device, the input device comprising:
a capture device (14) for capturing a digital image of a physical source document;
a detector (16) for detecting one or more annotated regions in the captured image of the source document; and
a device (16) for entering one or more words from a detected annotated region of the source document into the storage device.

2. A system according to claim 1, further comprising a capture device (14) for capturing a digital image of a physical target document to be annotated.

3. A method of processing a source document (26) and a target document (25), comprising:
inputting and storing (40-46) a plurality of words of interest;
searching (56) the target document to identify whether any of said words of interest are present in the target document;
annotating (56) said words located in the target document;
**characterized in that** the step of inputting and storing comprises inputting and storing words from the source document by the sub-steps of:
capturing (40) a digital image of a physical source document;
detecting (42) one or more annotated regions in the captured image of the source document; and
storing (46) one or more words from a detected annotated region of the source document.

4. An apparatus for generating a summary of a document, comprising:
an image capture device for capturing an image of a document;
a processing device for detecting annotations made to the document prior to image capture; and
a summary generator for generating a summary of a document based on the detected annotations;
**characterized in that**
the summary generator is operative to generate a summary of a different document from that on which the annotations are detected.

5. A method of generating a summary of a document, comprising:
(a) capturing an image of a document;
(b) detecting annotations made to the document prior to image capture; and
(c) using the detected annotations in the generation of a summary of a document;
**characterized in that** steps (a) and (b) are carried out on a different document from the document used in step (c).

## Patentansprüche

1. System für die Verarbeitung eines Quelldokuments (26; 30) und eines Zieldokuments (25; 34), wobei das System umfasst:
eine Speichervorrichtung (22) zur Speicherung einer Mehrzahl von Wörtern;
eine Eingabevorrichtung (14, 16) zur Eingabe von Wörtern in die Speichervorrichtung;
eine Suchvorrichtung (16), um zu identifizieren, ob etwelche der Wörter, die in der Speichervorrichtung vorhanden sind, im Zieldokument vorhanden sind; und
eine Annotationsvorrichtung (16), um die im Zieldokument aufgefundenen Wörter zu annotieren; **dadurch gekennzeichnet, dass**:
die Eingabevorrichtung konfiguriert ist, um Wörter aus dem Quelldokument in die Speichervorrichtung einzugeben, wobei die Eingabevorrichtung umfasst:
eine Erfassungsvorrichtung (14) zur Erfassung eines digitalen Images eines physischen Quelldokuments;
einen Detektor (16) zur Erkennung eines oder mehrerer annotierter Bereiche im erfassten Image des Quelldokuments; und
eine Vorrichtung (16) zur Eingabe eines oder mehrerer Wörter von einem erkannten annotierten Bereich des Quelldokuments in die Speichervorrichtung.

2. System nach Anspruch 1, weiter eine Erfassungsvorrichtung (14) zur Erfassung eines digitalen Images eines zu annotierenden, physischen Zieldokuments umfassend.

3. Verfahren zur Verarbeitung eines Quelldokuments (26) und eines Zieldokuments (25), umfassend:
Eingabe und Speicherung (40 - 46) einer Mehrzahl von interessanten Wörtern;
Durchsuche (56) des Zieldokuments, um zu identifizieren, ob etwelche der interessanten Wörter im Zieldokument vorhanden sind;
Annotieren (56) der im Zieldokument aufgefundenen Wörter;
**dadurch gekennzeichnet, dass** der Eingabe- und Speicherschritt die Eingabe und Speicherung von Wörtern aus dem Quelldokument durch die Teilschritte umfasst:
Erfassung (40) eines digitalen Images eines physischen Quelldokuments;
Erkennung (42) eines oder mehrerer annotierter Bereiche im erfassten Image des Quelldokuments; und
Speicherung (46) eines oder mehrerer Wörter von einem erkannten annotierten Bereich des Quelldokuments.

4. Gerät zur Erzeugung einer Zusammenfassung eines Dokuments, umfassend:
eine Bilderfassungsvorrichtung zur Erfassung des Images eines Dokuments;
eine Verarbeitungsvorrichtung zur Erkennung von Annotationen, die vor der Bilderfassung am Dokument angebracht worden waren; und
einen Zusammenfassungsgenerator zur Erzeugung einer Zusammenfassung eines Dokuments auf der Grundlage der erkannten Annotationen;
**dadurch gekennzeichnet, dass**
der Zusammenfassungsgenerator so arbeitet, dass er eine Zusammenfassung eines anderen Dokuments als dem, bei dem die Annotationen erkannt werden, erzeugt.

5. Verfahren zur Erzeugung einer Zusammenfassung eines Dokuments, umfassend:
a) Erfassung eines Images eines Dokuments;
b) Erkennung von an dem Dokument vor der Bilderfassung angebrachten Annotationen; und
c) Verwendung der erkannten Annotationen bei der Erzeugung einer Zusammenfassung eines Dokuments;
**dadurch gekennzeichnet, dass** Schritte (a) und (b) an einem anderen Dokument ausgeführt werden als dem in Schritt (c) verwendeten Dokument.

## Revendications

1. Système de traitement d'un document source (26 ; 30) et d'un document cible (25 ; 34), le système comprenant :
un dispositif de mémorisation (22) destiné à mémoriser une pluralité de mots,
un dispositif d'entrée (14, 16) destiné à appliquer en entrée des mots dans les dispositifs de mémorisation,
un dispositif de recherche (16) destiné à identifier si l'un quelconque des mots présents dans le dispositif de mémorisation est présent dans le document cible, et
un dispositif d'annotation (16) destiné à annoter lesdits mots situés dans le document cible, **caractérisé en ce que** :
le dispositif d'entrée est configuré pour appliquer en entrée des mots du document source dans le dispositif de mémorisation, le dispositif d'entrée comprenant :
un dispositif d'acquisition (14) destiné à acquérir une image numérique d'un document source physique,
un détecteur (16) destiné à détecter une ou plusieurs régions annotées dans l'image acquise du document source, et
un dispositif (16) destiné à entrer un ou plusieurs mots d'une région annotée détectée du document source dans le dispositif de mémorisation.

2. Système selon la revendication 1, comprenant en outre un dispositif d'acquisition (14) destiné à acquérir une image numérique d'un document cible physique à annoter.

3. Procédé de traitement d'un document source (26) et d'un document cible (25), comprenant les étapes consistant à :
appliquer en entrée et mémoriser (40 à 46) une pluralité de mots intéressants,
effectuer une recherche (56) dans le document cible pour identifier si l'un quelconque desdits mots intéressants est présent dans le document cible,
annoter (56) lesdits mots localisés dans le document cible,
**caractérisé en ce que** l'étape consistant à appliquer en entrée et à mémoriser comprend l'application en entrée et la mémorisation de mots provenant du document source par le biais des sous-étapes consistant à :
acquérir (40) une image numérique d'un document source physique,
détecter (42) une ou plusieurs régions annotées dans l'image acquise du document source, et
mémoriser (46) un ou plusieurs mots provenant d'une région annotée détectée du document source.

4. Dispositif destiné à générer un résumé d'un document comprenant :
un dispositif d'acquisition d'image destiné à acquérir une image d'un document,
un dispositif de traitement destiné à détecter des annotations faites au document avant l'acquisition d'image, et
un générateur de résumé destiné à générer un résumé d'un document sur la base des annotations détectées,
**caractérisé en ce que**
le générateur de résumé agit pour générer un résumé d'un document différent à partir de celui sur lequel les annotations sont détectées.

5. Procédé de génération de résumé d'un document comprenant les étapes consistant à :
(a) acquérir une image d'un document,
(b) détecter des annotations faites au document avant l'acquisition d'image, et
(c) utiliser les annotations détectées pour la génération d'un résumé d'un document,
**caractérisé en ce que** les étapes (a) et (b) sont exécutées sur un document différent du document utilisé à l'étape (c).
